# EUROPEAN PATENT APPLICATION

(11) **EP 2 319 645 A1**
(43) Date of publication of application: **11.05.2011**
(21) Application number: 10187844.5
(22) Date of filing: 18.10.2010
(51) Int. Cl.: B23B 51/02

(54) **A rotatable tool for chip removing machining as well as a loose top and a basic body therefor**

(30) Priority: 10.11.2009 SE 0950850
(71) Applicant: Sandvik Intellectual Property AB, 811 81 Sandviken (SE)
(72) Inventor: Frisendahl, Jörgen, SE-811 61, SANDVIKEN (SE)

(57) **Abstract**

The invention relates to a rotatable cutting tool, e.g., a drill, and of the type that comprises, on one hand, a basic body, which in a front end includes a jaw (13) delimited by two torque-transferring drivers (14a, 14b) and an intermediate bottom (15) in which an axial centre hole (16) mouths, and on the other hand a loose top (2) having a pin (17) that protrudes axially from a rear end (10) and is delimited by a free end surface (23) and an envelope surface (22) in which a shoulder surface (32) is included for a locking screw (21), which is arranged in a radial bore (20) between the envelope surface (6) of the basic body and the centre hole (16). In the pin (17) of the loose top, a countersink (35) axially spaced apart from the end surface (23) is formed, e.g. a groove, for the receipt of a snap-in member (34) arranged along the inside of the centre hole (16) to provisionally clamp the pin in the centre hole when the locking screw is not tightened. In such a way it is guaranteed that the loose top does not need to be retained manually in the jaw in connection with replacement.

In addition, the invention relates to a loose top as such, as well as to a basic body of the tool as such.

## Description

### Technical Field of the Invention

In a first aspect, this invention relates to a rotatably tool intended for chip removing machining and of the type that comprises, on one hand, a basic body having front and rear ends between which a first centre axis extends with which an envelope surface is concentric, the front end including a jaw delimited by two torque-transferring drivers and an intermediate bottom in which a centre hole extending axially inside the basic body mouths, and a bore for a locking screw extending radially between the centre hole and the envelope surface, and on the other hand a loose top that includes front and rear ends between which a second centre axis extends, in the extension of which a pin protruding from the rear end extends that is delimited by a free end surface and an envelope surface in which a shoulder surface is included for a locking screw arranged in the radial bore.

In further aspects, the invention also relates to a loose top and a basic body as such.

Tools of the kind in question are suitable for chip removing or cutting machining (drilling and milling, respectively) of workpieces of metal, such as steel, cast iron, aluminium, titanium, yellow metals, etc. The tools may also be used for the machining of composite material of different types.

### Background of the Invention

More recently, drilling tools as well as milling tools have been developed, e.g., in the form of shank-end mills, which, contrary to integral solid tools, are composed of two parts, *viz.* a basic body and a head detachably connected with the same and thereby being replaceable, and in which head the requisite cutting edges are included. In such a way, the major part of the tool can be manufactured from a comparatively inexpensive material having a moderate modulus of elasticity, such as steel, while a smaller part, *viz.* the head, can be manufactured from a harder and more expensive material, such as cemented carbide, cermet, ceramics and the like, which gives the requisite cutting edges a good chip-removing capacity, good machining precision and long service life. In other words, the head forms a wear part that can be discarded after wear-out, while the basic body can be re-used several times (e.g., 10 to 20 replacements). A now recognized denomination of such, cutting edge-carrying heads is "loose tops", which henceforth will be used in this document.

### Prior Art

Drilling tools as well as milling tools of the loose top type are widely described in the patent literature and may be divided into a plurality of different categories depending on the ideas on which the designs are based. To one of these categories tools belong that are based on the use of a basic body and a loose top of the type initially mentioned, i.e., a basic body having a front jaw and a hole mouthing in the bottom of the jaw, into which hole a pin of the loose top can be inserted in order to center the loose top. This tool design presupposes that the loose top is mounted and dismounted by being inserted axially into and out of, respectively, the jaw of the basic body. An example of a tool of this type realized in the form of a drill is disclosed in US 6012881 (see also US 6109841). Other examples are disclosed in the (not yet publicly available) Swedish patent applications SE 0900844-2 and SE 0900845-9.

Drills of the loose top type are often mounted projecting vertically downward, or at least directed generally downward, from the holder in the driving machine, which in turn is situated above a table on which a workpiece can be placed. For time-saving reasons, it is desirable upon replacement of the loose tops to dismount the individual, worn loose top directly from the basic body clamped in the holder of the machine, i.e., without first needing to detach the proper basic body from the holder. In an analogous way, the replacing, fresh loose top is mounted directly in the basic body remaining in the holder. In other words, the basic body is detached from the holder of the machine only when the same has worn out or alternatively when it should be replaced by a drill having another dimension.

Previously known drills of the type that requires axial movement of the loose top into and out of a downwardly open jaw in the basic body, present in this respect annoying problems for the operator. Thus, it is required that the operator when mounting holds the loose top with one hand, while the other hand takes care of tightening of the locking screw. However, the drill is often situated deep inside the machine, and therefore the operator has to lean or bend far in over the subjacent table. To overcome this posture in a convenient and reliable way, the operator would theoretically need an additional hand to lean against the table, something that however is utopian. A compromise between these three incompatible desires will therefore in practice be that the operator leans one arm against the table and uses the hand of this arm to passably retain the loose top in the jaw, while the hand of the other arm is utilized to tighten the locking screw. However, such compromises are most unsatisfactory, not only in respect of the ergonomics of the operator, but also in respect of the possibility of quickly and distinctly mounting the loose top in the correct position. In this connection, it should be pointed out that if the operator loses the grip of the loose top before this has been fixed properly, the loose top may come loose and disappear down into the machine; which is something that in turn may give rise to a time-consuming search operation.

### Objects and Features of the Invention

The present invention aims at obviating the above-mentioned problems and at providing an improved tool of the kind in question. Therefore, a primary object of the invention is to provide a loose top tool, the loose top of which can be mounted in and dismounted out of, respectively, the jaw in a basic body of the tool in a convenient, quick and reliable way. In particular, the requisite replacements of loose tops should be possible to be carried out without neither the worn loose top nor the new and fresh one running an obvious risk of being lost in or adjacent to the drilling machine in question. In addition, unintentional incorrect mounting of the loose top should efficiently be counteracted.

According to the invention, at least the primary object is achieved by means of the tool defined in the independent claim 1. Preferred embodiments of the loose top tool according to the invention are further defined in the dependent claims 2-6.

In a further aspect, the invention also relates to a loose top as such. The fundamental features of this loose top are seen in the independent claim 7, while preferred embodiments of the same are defined in the dependent claims 8 and 9.

In a third aspect, the invention also relates to a basic body of a tool as such. This is defined in the independent claim 10 as well as in the dependent claims 11-14.

### Further Elucidation of Prior Art

In US 4950108, a loose top drill is disclosed in which the loose top is fixed in the front end of a basic body by means of two axial locking screws, which are tightened in a threaded, axial hole each, which mouths in the front end of the basic body. In the interface between the loose top and the basic body, a male member is arranged, which *per se* is spring-loaded, but which consists of a centering pin that does not have any capability of provisionally clamping the loose top before some one of the two locking screws has been tightened.

### Brief Description of the Appended Drawings

In the drawings:
- Fig. 1: is a partly sectioned perspective view of a loose top tool in the form of a drill, the basic body and loose top of which are shown in a composed, operative state,
- Fig. 2: is an exploded perspective view showing the loose top separated from the basic body,
- Fig. 3: is an enlarged exploded view showing a jaw included in the basic body in bird's eye view and the loose top in worm's eye view,
- Fig. 4: is a partial side view showing a front part of the basic body,
- Fig. 5: is a cross section V-V in Fig. 4, and
- Fig. 6: is an exploded view corresponding to Fig. 3, which illustrates how the invention can be applied in an alternative embodiment of a loose top drill.

### Detailed Description of Preferred Embodiments of the Invention

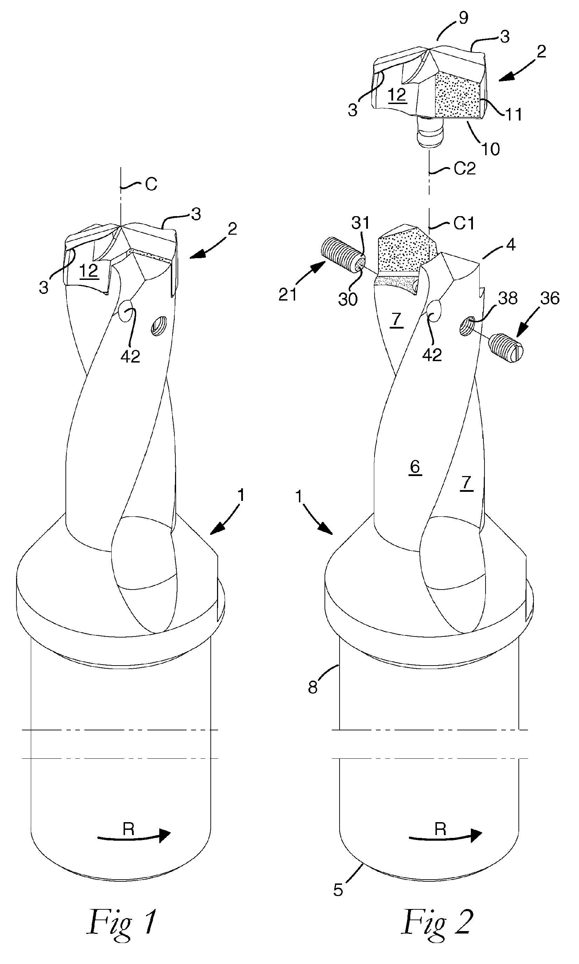

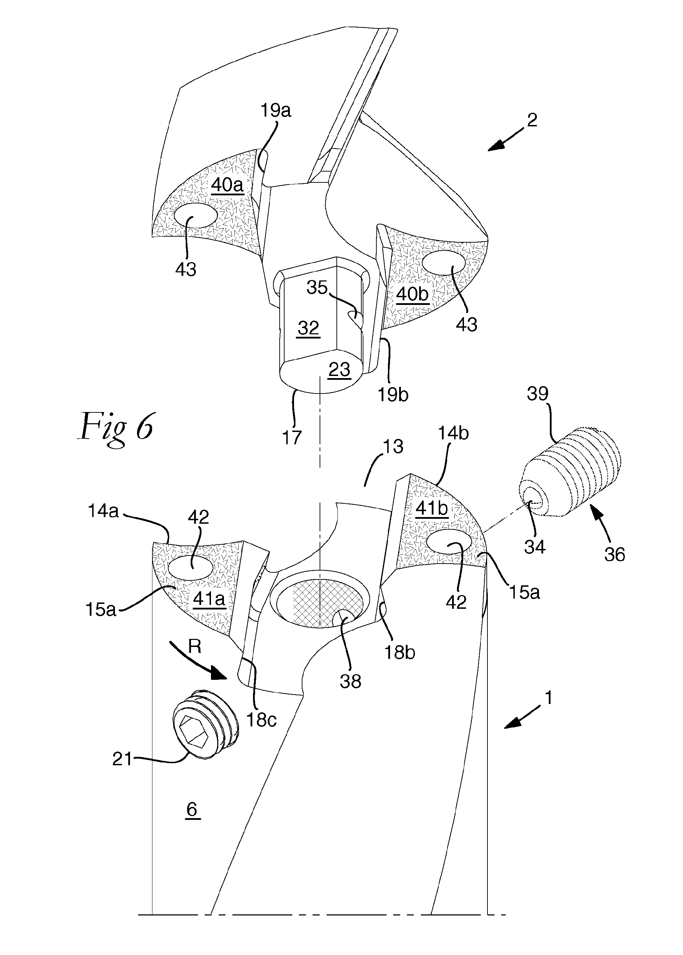

In the drawings, the invention has been exemplified in the form of drilling tools in two different embodiments, *viz.* a first embodiment according to Figs. 1-5 and a second one according to Fig. 6. The drilling tool shown in Figs. 1 and 2 comprises a basic body 1 and a loose top 2 in which the requisite cutting edges 3 are included. In its composed, operative state according to Fig. 1, the tool is rotatable around a centre axis designated C, more precisely in the direction of rotation R. In Fig. 2, it is seen that the basic body 1 includes front and rear ends 4, 5 between which a centre axis C1 specific to the basic body extends. In the backward direction from the front end 4, a cylindrical envelope surface 6 extends in which two chip flutes 7 are countersunk, which in this case are helicoidal, but which also may be straight. In the example, the chip flutes 7 end in a collar included in a rear part 8 intended to be attached in the driving holder of the drilling machine in question.

Also the loose top 2 includes front and rear ends 9, 10 and an own centre axis C2, with which two envelope part surfaces 11 are concentric. In the loose top, two chip flute sections 12 are also included, which form extensions of the chip flutes 7 of the basic body, when the loose top is mounted onto the basic body. If the loose top 2 is centered correctly in relation to the basic body, the individual centre axes C1 and C2 coincide with the centre axis C of the composed drilling tool.

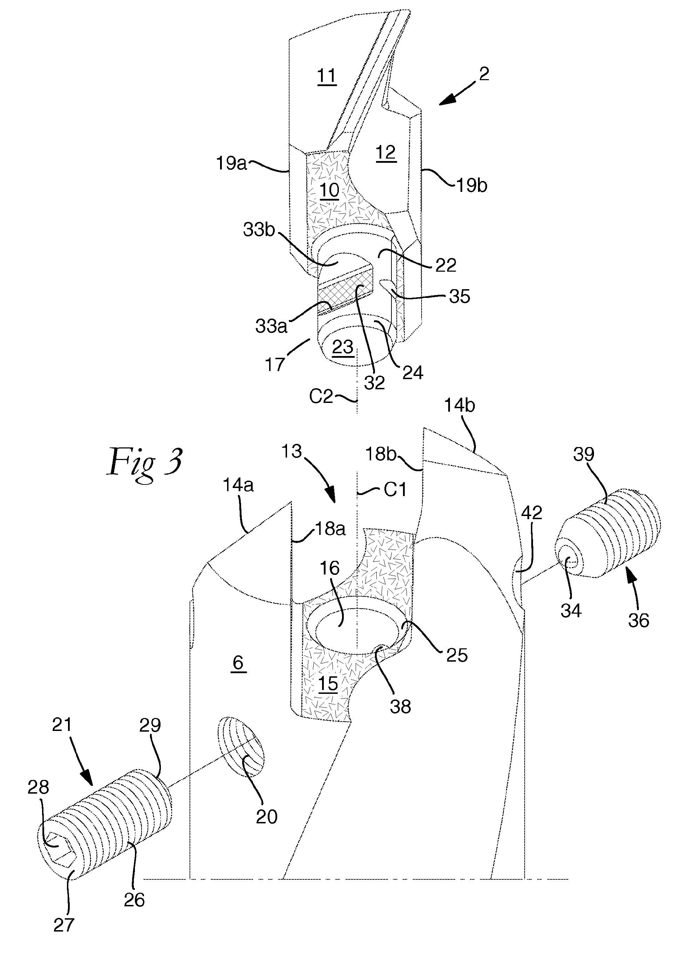

Since the major part of the basic body 1 lacks interest in connection with the invention, henceforth only the front end portion thereof will be illustrated together with the loose top 2, more precisely on an enlarged scale in Figs. 3-5.

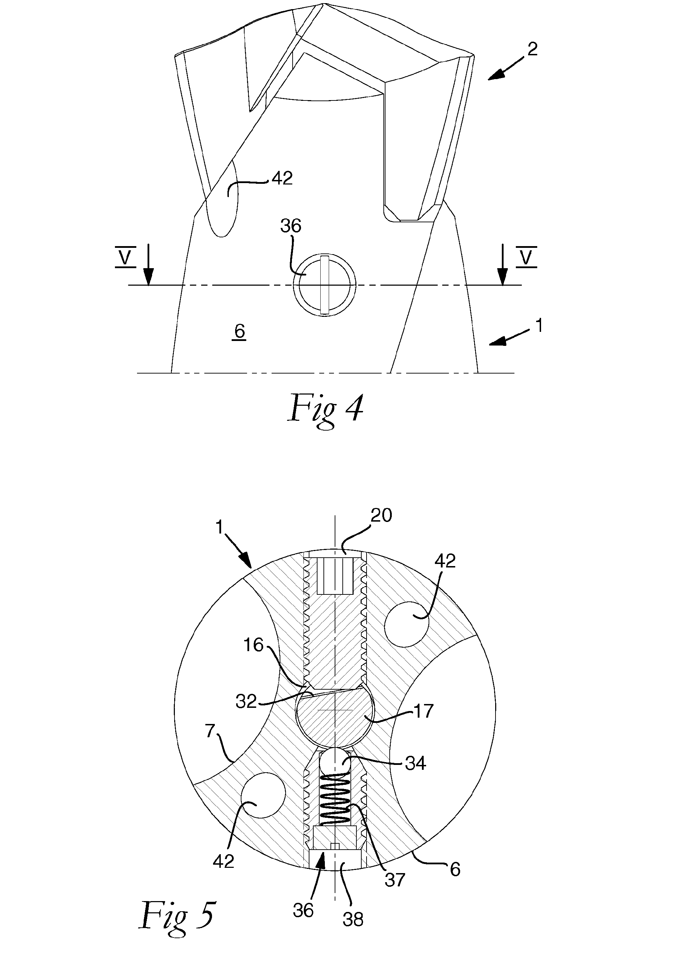

As is seen in Fig. 3, a jaw 13 is formed in the front part of the basic body 1 and delimited by two diametrically spaced-apart drivers 14a, 14b as well as by an intermediate bottom 15 in the form of a plane surface. In the bottom surface 15, which in this case serves as an axial support surface for the loose top, a centre hole 16 mouths in which a centering pin 17 is insertable that protrudes axially backward from the rear end 10 of the loose top 1, which rear end 10 has the shape of a plane axial contact surface that can be pressed against the bottom surface 15 of the jaw. The drivers 14a, 14b consist of non-compliant lugs, contrary to elastically compliant branches. The insides 18a, 18b of the drivers 14a, 14b form side support surfaces for two opposite side contact surfaces 19a, 19b of the loose top 2. In this case, the hole wall of the centre hole 16 is cylindrical and extends axially so far into the basic body 1 that a radial hole or bore 20 (see also Fig. 5) can mouth therein with one end thereof. This radial bore 20, the opposite end of which mouths in the envelope surface 6, includes a female thread that can co-operate with a male thread 26 of a locking screw 21, which is movable in and out of the bore 20 and serves as a tightening device for the pin 17.

Like the centre hole 16, the centering pin 17 has a generally cylindrical basic shape. More precisely, the centering pin 17 is delimited by a cylindrical envelope surface 22 and a plane end surface 23. Between the envelope surface 22 and the end surface 23, a conical transition surface 24 may advantageously be formed to facilitate the insertion of the centering pin into the centre hole 16. In an analogous way, a conical, ring-shaped surface 25 is formed between the plane bottom surface 15 of the jaw 13 and the centre hole 16.

In Fig. 3, it is shown how the male thread 26 of the locking screw 21 extends essentially along the entire length of the locking screw, more precisely between a rear or outer end 27 in which a key grip 28 is formed, and a front or inner end 29. As is seen in Fig. 2, said front end includes a plane, circular end surface 30 and a conical transition surface 31 between the end surface 30 and the thread 26.

In Fig. 3, it is furthermore seen that the pin 17 of the loose top includes a shoulder surface 32 that is surrounded by two inclined chamfer surfaces 33a, 33b. All these surfaces 32, 33a and 33b may be plane, the obtuse angle between the surfaces 32 and 33a advantageously being approximately equally great as the angle between the front end surface 30 of the locking screw and the conical transition surface 31. The surfaces 32, 33a and 33b together delimit a chute that opens in the envelope surface of the pin 17.

When the loose top 2 is to be mounted in the jaw 13, the same is inserted between the branches 14a, 14b, the centering pin 17 being inserted into the centre hole 16 until the rear end surface 10 of the loose top is pressed against the bottom surface 15 of the jaw. In this state, the locking screw 21 is somewhat unscrewed from the bore 20. As is seen in Fig. 5, the shoulder surface 32 of the centering pin 17 is initially inclined in relation to the front end surface 30 of the locking screw (see also Fig. 2). When the locking screw is tightened with the purpose of fixing the loose top, the contact between the front end surface 30 of the locking screw and the shoulder surface 32 will therefore guarantee a turning of the centering pin and thereby the loose top in its entirety. In such a way, the side contact surfaces 19a, 19b of the loose top are pressed against the side support surfaces 18a, 18b on the insides of the drivers 14a, 14b. Simultaneously, the contact between the cone surface 31 of the locking screw and the chamfer surface 33a of the centering pin entails that an axial tensile force, which presses the end surface 10 of the loose top against the bottom surface 15 of the jaw 13, is applied to the centering pin. In other words, the axial clamping of the loose top is in this case guaranteed by the engagement of the locking screw in the chute in the centering pin.

It should be evident that if the drilling tool is vertically mounted in a machine with the jaw 13 opening downward, the loose top 2 has to, in one way or the other, be retained in the jaw 13 before the locking screw 21 finally is tightened. As has been mentioned by way of introduction, this has previously been effected in a manual way by means of the hand that has not been occupied by tightening the locking screw (with the accompanying disadvantages).

In accordance with the invention, a provisional clamping is guaranteed of the loose top in connection with mounting and dismounting in a mechanical way instead of a manual one, more precisely by the loose top being attached by snap action in the jaw. For this purpose, a snap-in member designated 34 is arranged at the centre hole of the basic body 1, which snap-in member, on one hand, can yield, and on the other hand engage a countersink 35 in the centering pin 17 of the loose top. In the shown, preferred embodiment, the snap-in member 34 is a lock body in the form of a ball that is mounted in a cartridge 36 together with a spring 37 (see Fig. 5). More precisely, the spring 37 is a compression spring, which always aims to press out the ball toward an end position and against the action of which the ball can be pressed into the cartridge. The cartridge 36, and thereby the ball 34, is mounted in a second bore 38, which extends between the envelope surface 6 of the basic body and the centre hole 16. This second bore 38 is advantageously placed approximately diametrically opposite the first bore 20. Although the cartridge can be mounted in various ways in the bore 38, in the example, a threaded joint is preferred that comprises a male thread 39 outside the cartridge and a female thread in the bore 38. In such a way, the cartridge can easily be dismounted from the bore, e.g., in connection with possible damage.

The countersink 35 in the centering pin 17 of the loose top is advantageously a long narrow groove that extends peripherally along the envelope surface 22 of the centering pin and is spaced apart from the end surface 23. By the fact that the groove has a certain, peripheral length extension, the minimal turning of the centering pin, which arises when the locking screw 21 is tightened, will not entail that the ball 34 loses its engagement with the groove.

### The Function and Advantages of the Invention

The cartridge 36 is mounted in such a way that the ball 34 normally projects one or a few tenth of a millimetre from the inside of the centre hole 16. Simultaneously, the inner end 29 of the locking screw 21 is distanced from the centre hole (although the same may be situated near the same). When the centering pin is inserted into the centre hole 16, the ball 34 is pressed away against the action of the spring 37 until the groove 35 is located on a level with the ball. In this state, the ball provides for a provisional clamping of the centering pin - and thereby the loose top - after which final fixation of the loose top can be effected by tightening the locking screw 21.

It should be pointed out that the spring force, by which the ball 34 is actuated, may be very moderate. Therefore, when dismounting the loose top, after the loosening of the locking screw 21, the spring force does not offer any appreciable resistance to manual, axial retraction of the loose top from the jaw 13.

A fundamental advantage of the invention is that the operator only has to use one hand for the proper mounting and dismounting operation, while the other hand can be utilized for other purposes, e.g., to support the upper part of the body when required. Replacement of the loose top is facilitated even if the basic body would be mounted in another way than vertically in a co-operating machine, e.g., horizontally, as well as when the same not at all is applied in any machine. In the last-mentioned case, the provisional snap-in fastening of the loose top makes that the operator can use one of the hands to fix the basic body, while the other is utilized to tighten the locking screw.

Reference is now made to Fig. 6 that illustrates an alternative tool embodiment, which differs from the previously described embodiment only in respect of how the loose top is locked in the jaw 13 of the basic body. Thus, in this case, the shoulder surface 32 of the centering pin 17 for the locking screw 21 extends all the way along the length extension of the centering pin. In addition, two side contact surfaces 19a, 19b of the loose top 2 are inclined in relation to each other (and not parallel as in the preceding example), and co-operate with likewise inclined side support surfaces 18a, 18b on the insides of the drivers 14a, 14b. When the locking screw 21 is tightened against the shoulder surface 32, the loose top is turned so that the side contact surfaces 19a, 19b are pressed against the side support surfaces 18a, 18b, which by the inclination thereof form a dovetail groove that prevents axial retraction of the loose top from the jaw.

Another difference between this embodiment and the preceding one is that axial contact surfaces 40a, 40b of the loose top 2 are pressed against axial support surfaces 41 a, 41 b formed on the front ends of the branches 14a, 14b instead of in the bottom of the jaw 13. In other respects, the provisional snap-in fastening of the loose top is analogous to the previously described one in that a spring-loaded ball 34 in a cartridge 36 can engage a groove 35 on the centering pin 17 of the loose top.

It should be noted that two flushing fluid channels 42 running inside the basic body 1 co-operate with two through channels 43 in the loose top 2. In the embodiment according to Figs. 1-5, the corresponding channels 42 mouth directly in the envelope surface of the basic body without being extended through the loose top. In both cases, however, the channels 42 formed in the basic body are in a satisfactory way spaced apart from the two radial bores 20, 38.

### Feasible Modifications of the Invention

The invention is not limited only to the examples that have been shown in the drawings. Instead of a ball loaded by a spring, also other spring-loaded lock bodies may accordingly be a possibility, e.g., plugs. Also other snap-in members than spring-loaded lock bodies may be used to realize the invention. For instance, it is feasible to mount a resilient leaf, or another member, in the inside of the centre hole, which leaf, on one hand, can engage a groove or a countersink in the centering pin of the loose top, and on the other hand yield in connection with mounting and dismounting of the loose top. The invention may furthermore be applied to other rotatable cutting tools than drills, e.g., milling cutters, such as shank-end mills. In conclusion, it should be emphasized that the yielding snap-in member according to the invention does not have any operatively fixing function, in that reliable fixation of the loose top is carried out exclusively by means of the locking screw. In other words, the diminutive force exerted on the ball by the exemplified spring is entirely inadequate to resist the cutting forces acting on the loose top during the rotation of the tool.

## Claims

1. Rotatable tool for chip removing machining comprising, on one hand, a basic body (1) having front and rear ends (4, 5) between which a first centre axis (C1) extends with which an envelope surface (6) is concentric, the front end (4) including a jaw (13) delimited by two torque-transferring drivers (14a, 14b) and an intermediate bottom (15) in which a centre hole (16) extending axially inside the basic body mouths, and a bore (20) for a locking screw (21) extending radially between the centre hole (16) and the envelope surface (6), and on the other hand a loose top (2) that includes front and rear ends (9, 10) between which a second centre axis (C2) extends, in the extension of which a pin (17) protruding from the rear end (10) extends that is delimited by a free end surface (23) and an envelope surface (22) in which a shoulder surface (32) is included for a locking screw (21) arranged in the radial bore, **characterized in that** a countersink (35) axially spaced apart from the end surface (23) is formed in the envelope surface (22) on the pin (17) of the loose top (2) for the receipt of a snap-in member (34) arranged along the inside of the centre hole (16) to provisionally clamp the pin in the centre hole when the locking screw is not tightened.

2. Tool according to claim 1, **characterized in that** the snap-in member (34) is located diametrically opposite the bore (20) for the locking screw (21) and the countersink (35) in the pin (17) of the loose top opposite said shoulder surface (32).

3. Tool according to claim 1 or 2, **characterized in that** the snap-in member is a lock body (34) loaded by a spring (37).

4. Tool according to claim 3, **characterized in that** the lock body (34) and the spring (37) are accommodated in a cartridge (36) that is mounted in a second bore (38), which extends radially between the centre hole (16) and envelope surface (6) of the basic body (1).

5. Tool according to claim 4, **characterized in that** the cartridge (36) includes a male thread (39) that is tightened in a female thread in the second bore (38).

6. Tool according to any one of the preceding claims, **characterized in that** the countersink is a groove (35) that extends peripherally along the envelope surface (22) of the pin (17) of the loose top (2).

7. Loose top for rotatable tools for chip removing machining, comprising front and rear ends (9, 10) between which a centre axis (C2) extends, in the extension of which a pin (17) protruding from the rear end (10) extends that is delimited by a free end surface (23) and an envelope surface (22) in which a shoulder surface (32) is included for a locking screw, **characterized in that** a countersink (35) axially spaced apart from the end surface (23) is formed in the envelope surface (22) of the pin (17) for the receipt of a snap-in member in a co-operating basic body of the tool.

8. Loose top according to claim 7, **characterized in that** the countersink is a groove (35) that extends peripherally along the envelope surface (22) of the pin.

9. Loose top according to claim 7 or 8, **characterized in that** the countersink (35) is situated diametrically opposite the shoulder surface (32).

10. Basic body for rotatable tools for chip removing machining, comprising front and rear ends (4, 5) between which a centre axis (C1) extends with which an envelope surface (6) is concentric, the front end (4) including a jaw (13) delimited by two torque-transferring drivers (14a, 14b) and an intermediate bottom (15) in which a centre hole (16) extending inside the basic body mouths for the receipt of a pin on a co-operating loose top, and a bore (20) for a locking screw (21) extending radially between the centre hole (16) and the envelope surface (6), **characterized in that** a snap-in member (34) spaced apart from the bore (20) for the locking screw is arranged on the inside of the centre hole (16) to provisionally clamp the pin of the loose top in the centre hole when the locking screw is not tightened.

11. Basic body according to claim 10, **characterized in that** the snap-in member (34) is located diametrically opposite the bore (20) for the locking screw.

12. Basic body according to claim 10 or 11, **characterized in that** the snap-in member is a lock body (34) loaded by a spring (37).

13. Basic body according to claim 12, **characterized in that** the lock body (34) and the spring (37) are accommodated in a cartridge (36) that is mounted in a second bore (38), which extends radially between the centre hole (16) and the envelope surface (6).

14. Basic body according to claim 13, **characterized in that** the cartridge (36) includes a male thread (39) that is tightened in a female thread in said second bore (38).
